# EUROPÄISCHE PATENTSCHRIFT

(11) **EP 4 197 326 B1**
(45) Veröffentlichungstag und Bekanntmachung des Hinweises auf die Patenterteilung: **09.12.2026**
(21) Anmeldenummer: 22401034.8
(22) Anmeldetag: 05.12.2022
(51) Int. Cl.: A01M 7/00

(54) **LANDWIRTSCHAFTLICHES ARBEITSGERÄT MIT EINEM GESTÄNGE**
AGRICULTURAL WORKING DEVICE WITH A BOOM
OUTIL AGRICOLE AVEC UNE RAMPE

(30) Priorität: 15.12.2021 DE 102021133284
(43) Veröffentlichungstag der Anmeldung: 21.06.2023
(73) Patentinhaber: Amazonen-Werke H. Dreyer SE & Co. KG, 49205 Hasbergen (DE)
(72) Erfinder: Kowollik, Daniel, 47443 Moers (DE)

(56) Entgegenhaltungen:
- EP-A1- 4 014 732
- WO-A1-2020/169818
- DE-A1- 102006 003 544
- US-A- 4 588 128
- US-A1- 2006 255 175

## Beschreibung

Die Erfindung betrifft ein landwirtschaftliches Arbeitsgerät mit einem Gestänge gemäß dem Oberbegriff des Patentanspruches 1.

Es sind vielfältige landwirtschaftliche Arbeitsgeräte zum Ausbringen von Verteilgut, wie Düngemittel, Pflanzenschutzmittel oder Saatgut bekannt, beispielsweise Feldspritzen oder Sä- und/oder Düngermaschinen. Um das Verteilgut großflächig und effizient auf dem zu bearbeitenden Feldboden und/oder dem darauf befindlichen Pflanzenbestand auszubringen, weisen derartige landwirtschaftliche Arbeitsgeräte ein Verteilergestänge mit mehreren Ausbringungselementen, etwa Sprühdüsen, auf. Das Verteilergestänge erstreckt sich dabei in einer Arbeitsstellung quer zur Fahrtrichtung bzw. Arbeitsrichtung und kann bei modernen Arbeitsgeräten Arbeitsbreiten von bis zu 50 m oder mehr aufweisen.

Damit ein derartiges Arbeitsgerät mit Gestänge für Transportfahrten auch über den öffentlichen Straßenverkehr bewegt werden kann, sind diese für gewöhnlich in einer sogenannten Transportstellung verbringbar und/oder betreibbar. Um dabei eine maximal zulässige, insbesondere gesetzlich vorgeschriebene, Breite des Arbeitsgeräts samt Gestänge, von insbesondere etwa 3 m, nicht zu überschreiten, sind gattungsgemäße Gestänge überwiegend klappbar ausgeführt.

Ein derartiges Arbeitsgerät ist beispielsweise in den Druckschriften DE 10 2017 104 803 A1, WO 2020/169818 A1 oder EP 4 014 732 A1 beschrieben. Demnach ist ein Gestänge bekannt, welches zwei an beiden Seiten eines mittleren und/oder zentralen Gestängeteils angeordnete Ausleger aufweist. Die Ausleger sind dabei jeweils in mehrere Abschnitte unterteilt. Des Weiteren sind die Ausleger dabei mittels Gelenken, welche insbesondere zwischen jeweils zwei einzelnen Abschnitten angeordnet sind, zwischen der quer zur Arbeitsrichtung ausgeklappten Arbeitsstellung und einer zumindest teilweise etwa in Arbeitsrichtung weisenden, insbesondere horizontal und/oder zick-zack-förmig, zusammengefalteten Transportstellung verstellbar. Insbesondere wird ein derartig ausgeführtes Gestänge in Transportstellung zumindest nahezu vollständig seitlich am Arbeitsgerät verstaut.

Ferner ist es aus auch bekannt, derartige Gestänge in Fahrt- bzw. Arbeitsrichtung gesehen zumindest nahezu vollständig hinter dem mittleren Gestängeteil bzw. im Heckbereich des Arbeitsgeräts zu verstauen, wie es beispielsweise in der Druckschrift DE 41 38 213 A1 beschrieben ist. Die einzelnen Abschnitte der jeweiligen Ausleger sind hierbei in eine zumindest in etwa quer zur Arbeitsrichtung weisenden, insbesondere horizontale, Transportstellung zusammengefaltet. Ebenso sind derartige Verteilergestänge bekannt, welche in Transportstellung in eine vertikal weisende Richtung verstaut sind.

Insofern ist es bereits bekannt, die Abschnitte derartiger Gestänge für die Transportstellung entweder seitlich am Arbeitsgerät oder im Heckbereich des Arbeitsgeräts zu verstauen. Aufgrund von Bestrebungen, die Arbeitsbreite und damit die Gestänge moderner landwirtschaftlicher Arbeitsgeräte immer weiter zu erhöhen und/oder derartige Gestänge mit immer mehr elektronischer Beleuchtung-, Erfassungs- und/oder Auswerteelektronik zu versehen, steigen in diesem Zusammenhang auch die Abmessungen der in Transportstellung zusammengefalteten Gestänge immer weiter an. Die bisher bekannten Gestänge sind jedoch aufgrund der gesetzlichen vorgegebenen Abmessungen für den Straßenverkehr und/oder eines negativen Einflusses auf einen Schwerpunkt des Arbeitsgeräts in ihren Abmessungen eingeschränkt, so dass eine Vergrößerung derartiger Gestänge, insbesondere der Abschnitte, und/oder eine höhere Anzahl an Abschnitten nicht ohne weiteres möglich ist. Insbesondere ist bei derartigen Gestängen der verhältnismäßig hohe Platzbedarf in der Transportstellung von Nachteil.

Die der Erfindung zugrunde liegende Aufgabe besteht somit darin, ein landwirtschaftliches Arbeitsgerät so zu gestalten, dass das Gestänge in der Transportstellung besonders kompakt verstaut ist.

Diese Aufgabe wird erfindungsgemäß durch die kennzeichnenden Merkmale des Anspruchs 1 gelöst.

In Folge dieser Maßnahme ist erreicht, dass das Gestänge, insbesondere der jeweilige Ausleger, in der Transportstellung in jeweils unterschiedlichen als Verstaubereichen bezeichneten Bauräumen verstaut und/oder platziert ist. Dabei ist erfindungsgemäß wenigstens einer der Abschnitte eines Auslegers in Fahrtrichtung gesehen vor dem mittleren Gestängeteil angeordnet, während wenigstens ein weiterer Abschnitt des Auslegers hinter dem mittleren Gestängeteil angeordnet ist. Besonders bevorzugt ist dabei, wenn die Abschnitte der Ausleger zumindest im Wesentlichen parallel und/oder in Waage zur Fahrtrichtung ausgerichtet sind. In einer alternativen Ausführungsform wäre auch denkbar, dass wenigstens einer der Abschnitte eines jeweiligen Auslegers in der Transportstellung und innerhalb des Verstaubereichs senkrecht und/oder in vertikaler Richtung verstaut und/oder platziert ist. Mit einer derartigen Ausführungsform ist das Gestänge in der Transportstellung besonders platzsparend verstaut.

In einer bevorzugten Ausführungsform umfasst das Arbeitsgerät wenigstens einen zwischen den beiden Auslegern angeordneten Vorratsbehälter, welcher zum Vorhalten von Verteilgut vorgesehen ist. Der Vorratsbehälter ist dabei in an sich bekannter Weise über wenigstens ein verteilgutleitendes Fördersystem mit den Ausbringungselementen verbunden, über welche das Verteilgut in bedarfsgerechten und/oder einstellbaren Mengen aus dem Vorratsbehälter zu den am Gestänge angeordneten Ausbringungselementen zubringbar ist.

In einer bevorzugten Ausführungsform des erfindungsgemäßen Arbeitsgeräts ist der erste Verstaubereich oberhalb und/oder seitlich neben dem Vorratsbehälter und der zweite Verstaubereich hinter dem Vorratsbehälter angeordnet. Ein oder mehrere Abschnitte der jeweiligen Ausleger sind dabei oberhalb und/oder seitlich entlang des Vorratsbehälters verstaut und/oder platziert, während ein oder mehrere andere Abschnitte eines jeweiligen Auslegers zumindest teilweise hinter dem Vorratsbehälter verstaut und/oder platziert sind.

Vorteilhaft ist, wenn die Abschnitte eines jeweiligen Auslegers räumlich in einer etwa quer zur Arbeitsrichtung gesehenen Richtung hintereinander und/oder aneinander platziert sind. Die in der Transportstellung etwa in Arbeitsrichtung weisenden Ausleger sind dabei bevorzugt derart zusammengefaltet, dass wenigstens eine Längsseite eines Abschnitts hinter und/oder an eine Längsseite eines anderen Abschnitts platziert ist, wobei dabei die Längsseiten aufeinanderfolgender Abschnitte einander zugewandt sind.

In einer Weiterbildung des erfindungsgemäßen Arbeitsgeräts sind die Abschnitte im zweiten Verstaubereich räumlich in gegensätzlicher Richtung zu den Abschnitten im ersten Verstaubereich hintereinander und/oder aneinander platziert. Mit anderen Worten sind die hierbei innerhalb des ersten Verstaubereichs angeordneten Abschnitte in einer zum Arbeitsgerät gesehenen lateralen Richtung aufeinanderfolgend aneinander platziert, während die innerhalb des zweiten Verstaubereichs angeordneten Abschnitte in einer dazu entgegengesetzten Richtung aufeinanderfolgend aneinander platziert sind. Erfindungsgemäss sind die Abschnitte des ersten Verstaubereichs in einer die Transportbreite definierenden und/oder beeinflussenden Weise aneinander geklappt, während die Abschnitte des zweiten Verstaubereichs in einer die Transportbreite nicht beeinflussenden Weise aneinander geklappt sind. Mit anderen Worten werden die Abschnitte im ersten Verstaubereich in aufeinanderfolgender Weise in eine vom Arbeitsgerät, insbesondere einer Mittelachse des Arbeitsgeräts, abweisenden Richtung zusammengeklappt, während die Abschnitte im zweiten Verstaubereich in aufeinanderfolgender Weise in eine zum Arbeitsgerät, insbesondere zur Mittelachse des Arbeitsgeräts, hin weisenden Richtung zusammengeklappt werden.

In einer anderen bevorzugten Ausführungsform des erfindungsgemäßen Arbeitsgeräts sind in Transportstellung ein oder mehrere im zweiten Verstaubereich angeordnete Abschnitte zumindest in etwa senkrecht zu den Abschnitten im ersten Verstaubereich ausgerichtet. Der eine oder die mehreren im zweiten Verstaubereich angeordneten Abschnitte sind dabei bevorzugt zumindest in etwa parallel zum mittleren Gestängeteil und dabei besonders bevorzugt in etwa Waage zum Boden ausgerichtet. Alternativ dazu können die im zweiten Verstaubereich platzierten Abschnitte auch zumindest teilweise vertikal nach oben oder unten ausgerichtet sein.

In einer anderen Weiterbildung des erfindungsgemäßen Arbeitsgeräts weisen die Ausleger jeweils einen dem mittleren Gestängeteil zugewandten inneren Abschnitt, einen dem mittleren Gestängeteil abgewandten äußeren Abschnitt und einen oder mehrere zwischen dem inneren und dem äußeren Abschnitt angeordnete mittlere Abschnitte auf. Der innere und äußere Abschnitt sind somit mittels dem einen oder der mehreren mittleren Abschnitte miteinander verbunden, wobei zwischen jedem der aufeinander folgenden Abschnitte jeweils wenigstens ein Gelenk zum Klappen der Abschnitte angeordnet ist. Die Länge des einen oder der mehreren mittleren Abschnitte übersteigt hierbei die Summe der Längen aus innerem und äußerem Abschnitt. Die Länge des einen oder der mehreren mittleren Abschnitte ist dabei vorzugsweise derart ausgebildet, dass der innere und äußere Abschnitt gemeinsam entlang derselben Längsseite des einen oder der mehreren mittleren Abschnitte platziert sind. Mit anderen Worten sind der innere und äußere Abschnitt hierbei in und/oder entlang einer gemeinsamen Ebene, welche korrespondierend zu einer Längsseite des einen oder der mehreren mittleren Abschnitte ausgerichtet ist, angeordnet.

In einer weiteren bevorzugten Ausführungsform des erfindungsgemäßen Arbeitsgeräts sind der eine oder die mehreren mittleren Abschnitte im ersten Verstaubereich mit dem inneren Abschnitt und im zweiten Verstaubereich mit dem äußeren Abschnitt aneinander platziert. Besonders bevorzugt sind der eine oder die mehreren mittleren Abschnitte in der Transportstellung in einer vom ersten zum zweiten Verstaubereich ragenden Weise angeordnet und/oder platziert.

Darüber hinaus sind die Abschnitte bevorzugt derart ausgebildet, dass jeder der Abschnitte in der Arbeitsstellung eine in Arbeitsrichtung weisende Vorderseite und eine entgegen der Arbeitsrichtung weisende Rückseite aufweist. Sowohl die Vorder- als auch die Rückseite bilden dabei die Hochseiten der jeweiligen Abschnitte. In der Transportstellung sind sowohl die Vorderseite als auch die Rückseite in eine zumindest in etwa quer zur Fahrt- bzw. Arbeitsrichtung weisenden Richtung ausgerichtet. Weiterhin sind entlang der Vorderseite eines oder mehrere Abschnitte bevorzugt elektronische Beleuchtungs-, Erfassungs- und/oder Auswerteelektronik vorgesehen, welche an einem oder mehreren Abschnitten des Auslegers angeordnet sind. Derartige Beleuchtungs-, Erfassungs- und/oder Auswerteelektronik kann beispielsweise nach Art von Sensoren, beispielsweise optischen Höhen- und/oder Abstandssensoren, Kameras, LED-Beleuchtungsmitteln, Steuergeräten oder dergleichen ausgebildet sein.

In einer weiteren Weiterbildung des erfindungsgemäßen Arbeitsgeräts sind die Abschnitte derartig verstellbar, dass, vorzugsweise alle im ersten und/oder zweiten Verstaubereich, direkt benachbarte und/oder aufeinander folgende Abschnitte in Transportstellung jeweils mit ihrer Rückseite aneinander platziert sind. Hiermit sind die Vorderseiten der Abschnitte und damit auch die daran angeordnete Beleuchtungs-, Erfassungs- und/oder Auswerteelektronik in der Transportstellung jeweils auf einer dem benachbarten und/oder dem darauffolgenden Abschnitt abgewandten Seite angeordnet. Ein zwischen zwei aneinander platzierten Abschnitten gebildeter und/oder eingeschlossener Zwischenraum ist somit zumindest nahezu frei von derartiger Beleuchtungs-, Erfassungs- und/oder Auswerteelektronik, so dass die Abschnitte besonders nah und damit platzsparend aneinander platzierbar sind.

Es ist ferner eine Ausführungsform bevorzugt, bei der die Gelenke dazu eingerichtet sind, die Abschnitte derartig zu verstellen, dass in Transportstellung zwischen den jeweils aneinander platzierten Abschnitten ein definierter Abstand gebildet und/oder eingeschlossen ist.

Darüber hinaus ist ein erfindungsgemäßes Arbeitsgerät bevorzugt, bei dem die Gelenke derartig ausgebildet sind, dass sich die im ersten und zweiten Verstaubereich gebildeten Abstände zumindest teilweise unterscheiden. Wenigstens einer der im zweiten Verstaubereich gebildeten Abstände unterscheidet sich hierbei gegenüber wenigstens einem im ersten Verstaubereich gebildeten Abstand. Der im zweiten Verstaubereich zwischen zumindest zwei Abschnitten gebildete Abstand ist besonders bevorzugt gegenüber dem einen oder den mehreren im ersten Verstaubereich gebildeten Abständen vergrößert ausgebildet. Ferner ist hierbei wenigstens ein weiterer bzw. zweiter äußerer Abschnitt bevorzugt, welcher an dem ersten bzw. an dem mittleren Abschnitt angeordneten äußeren Abschnitt verbunden ist.

Weitere Einzelheiten der Erfindung sind der Beispielsbeschreibung und den Zeichnungen zu entnehmen. Die Zeichnungen zeigen
- Fig.1: eine perspektivische Vorderansicht eines an einer Feldspritze angeordneten Verteilergestänges in ausgeklappter Arbeitsstellung;
- Fig.2: die Feldspritze mit einem in Transportstellung eingeklappten Verteilergestänge in schematischer Draufsicht; und
- Fig.3: ein zweites Ausführungsbeispiel der in Fig.2 gezeigten Feldspritze.

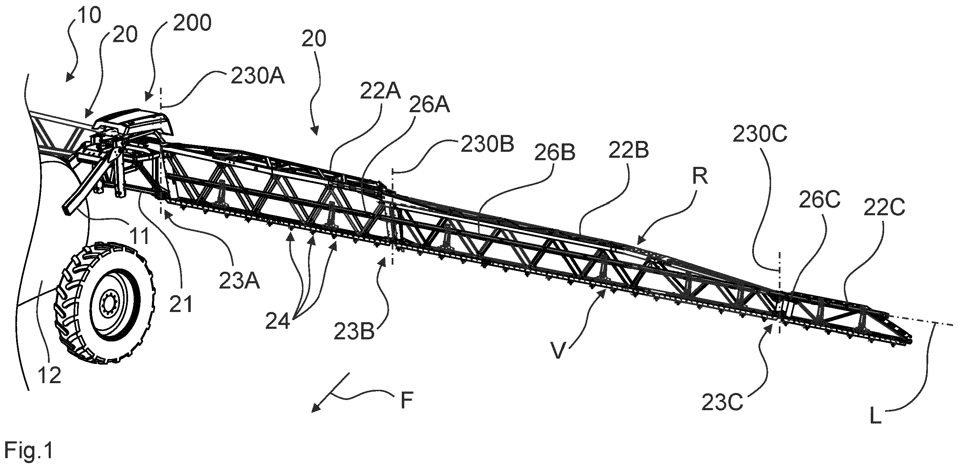

Ein als Feldspritze ausgebildetes landwirtschaftliches Arbeitsgerät 10 mit einem über einen Geräterahmen 11 gekoppelten und in Arbeitsstellung befindlichen Gestänge 200 ist in der Fig.1 gezeigt. Es ist zu erkennen, dass das Gestänge 200 einen mit dem Geräterahmen 11 verbundenen mittleren Gestängeteil 21 und sich quer zur Fahrtrichtung F bzw. Arbeitsrichtung gesehen, insbesondere jeweils nach links und rechts, erstreckende Ausleger 20 umfasst. Zur besseren Veranschaulichung ist in dieser Ansicht nur der linke Ausleger 20 vollständig gezeigt, während der rechte Ausleger nur angedeutet ist. Es ist weiterhin zu sehen, dass der linke Ausleger 20, insbesondere analog zum nicht gezeigten rechten Ausleger, in mehrere Abschnitte 22A-22C unterteilt ist, die klappbar und/oder schwenkbar mittels Gelenke 23A-23C miteinander in einer aufeinanderfolgen Weise verbunden sind. Nachfolgend wird der dem mittleren Gestängeteil 21 zugewandte Abschnitt auch als innerer Abschnitt 22A und der dem mittleren Gestängeteil 21 abgewandte Abschnitt auch als äußerer Abschnitt 22C bezeichnet. Der zwischen dem inneren und dem äußeren Abschnitt 22A, 22C angeordnete Abschnitt wird ferner als mittlerer Abschnitte 22B bezeichnet, wobei alternativ zur gezeigten Ausführungsform auch mehrere mittlere Abschnitte 22B zwischen dem inneren und dem äußeren Abschnitt 22A, 22C angeordnet sein können. Die einzelnen Abschnitte 22A-22C können hierbei um eine vertikale Achse 230A-230C verklappt werden, so dass die Arbeitsbreite bzw. Spannweite des landwirtschaftlichen Geräts 10, insbesondere des Gestänges 200, angepasst und/oder zwischen einer Arbeits- und Transportstellung verfahren werden kann.

Die Fig.1 zeigt einen Zustand, in dem die Abschnitte A1-A3 vollständig ausgeklappt sind. Das Gestänge 20 lässt sich dabei alternativ oder zusätzlich um eine zumindest in etwa parallel zur Fahrtrichtung F verlaufende nicht gezeigte Achse pendeln und/oder in vertikaler Richtung, insbesondere mittels Stellelementen, verstellen. Jeder der Abschnitte 22A-22C weist jeweils zwei parallel zu einer Längsachse L verlaufende Längsseiten bzw. Hochseiten auf, welche wiederrum in eine Vorderseite V und Rückseite R der Abschnitte 22A-22C unterteilt sind. Somit weist jeder der Abschnitte 22A-22C eine in Fahrtrichtung F bzw. Arbeitsrichtung weisende Vorderseite V und eine entgegen der Fahrtrichtung F weisende Rückseite R auf.

Darüber hinaus ist zu erkennen, dass das landwirtschaftliche Arbeitsgerät 10 wenigstens eine an jedem der Abschnitte 22A-22C, insbesondere an der Vorderseite V, angeordnete Beleuchtungs-, Erfassungs- und/oder Auswerteelektronik 26A-26C umfasst. Die Beleuchtungs-, Erfassungs- und/oder Auswerteelektronik 26A-26C ist in diesem Ausführungsbeispiel aus mehreren Sensoren zum berührungsfreien Erfassen von Pflanzen, insbesondere Nutzpflanzen und/oder Wildbewuchs, und aus Beleuchtungselementen, insbesondere LED's, ausgebildet. Alternativ oder zusätzlich können auch elektronische Steuergeräte oder dergleichen, insbesondere in hervorstehender Weise, an den einzelnen Abschnitten 26A-26C angeordnet sein. Weiterhin können die Sensoren auch nach Art einer Kamera oder als Abstandssensoren, wie beispielsweise Ultraschall- oder Radarsensor, ausgebildet sein.

An der Unterseite des Gestänges 200 sind weiterhin eine Vielzahl von Ausbringungselementen 24 angeordnet, welche in diesem Ausführungsbeispiel als Spritzdüsen zum Ausbringen bzw. Applizieren von flüssigem Verteilgut, wie beispielsweise Düngemittel und/oder Pflanzenschutzmittel, eingerichtet sind.

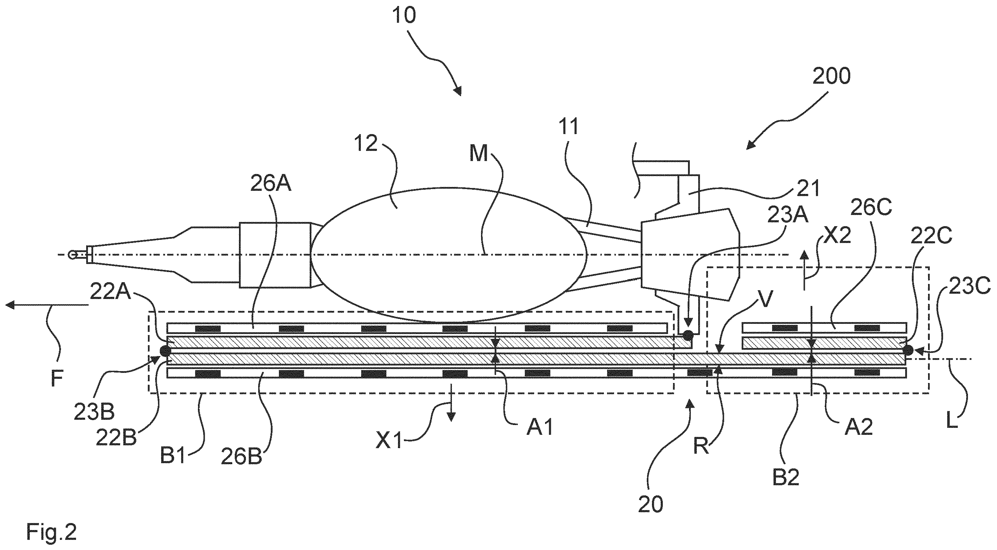

Die Fig.2 zeigt eine in Fahrtrichtung F weisende zusammengefaltete Transportstellung des Gestänges 200, bei dem ein zum Vorhalten des Verteilguts vorgesehener Vorratsbehälter 12 des Arbeitsgeräts 10 und der linke Ausleger 20 in einer Ansicht von oben zu sehen sind. Die einzelnen Abschnitte 22A-22C der Ausleger 20 bzw. des Gestänges 200 sind hierbei aneinander und zum Vorratsbehälter 12 hin geklappt.

Erfindungsgemäß sind für jeden der beiden Ausleger 20 jeweils mehrere Verstaubereiche B1, B2 vorgesehen, in denen in der Transportstellung jeweils unterschiedliche Abschnitte 22A-22C aneinander platziert sind. Der erste Verstaubereich B1 ist dabei in einer in Fahrt- bzw. Arbeitsrichtung F weisenden Richtung vor dem mittleren Gestängeteil 21 angeordnet. Der zweite Verstaubereich B2 ist wiederrum in einer in Fahrt- bzw. Arbeitsrichtung F weisenden Richtung hinter dem mittleren Gestängeteil 21 angeordnet. Wie im gezeigten Ausführungsbeispiel zu sehen ist, sind der innere Abschnitt 22A und der mittlere Abschnitt 22B im ersten Verstaubereich B1 aneinander platziert. Der äußere Abschnitt 22C und der mittlere Abschnitt 22B sind im zweiten Verstaubereich B2 aneinander platziert. Insbesondere ist hierbei zu erkennen, dass der erste Verstaubereich B1 seitlich neben dem Vorratsbehälter 12 und der zweite Verstaubereich B2 hinter dem Vorratsbehälter 12 angeordnet ist. Der erste Verstaubereich B1 könnte alternativ oder zusätzlich auch oberhalb des Vorratsbehälters 12 angeordnet sein.

Wie ebenfalls zu erkennen ist, sind die Abschnitte 22A-22C eines jeweiligen Auslegers 20 räumlich in einer etwa quer zur Fahrt- bzw. Arbeitsrichtung F gesehenen Richtung hintereinander und/oder aneinander platziert, wie durch die jeweiligen Pfeilrichtungen X1, X2 angedeutet ist. Hierbei ist vorgesehen, dass die im zweiten Verstaubereich B2 angeordneten Abschnitte 22B, 22C in aufeinanderfolgenden Weise räumlich in gegensätzlicher Richtung zu den im ersten Verstaubereich B2 angeordneten Abschnitten 22A, 22B aneinander platziert sind. Die Abschnitte 22A, 22B im ersten Verstaubereich B1 sind in aufeinander folgenden Weise in einer lateralen Richtung X1 aneinander geklappt, während die Abschnitte 22B, 22C im zweiten Verstaubereich B2 ausgehend vom eingeklappten mittleren Abschnitt 22B in aufeinander folgenden Weise in Richtung X2 zum Arbeitsgerät 10, insbesondere Vorratsbehälter 12, und/oder zu einer Mittelachse M hin aneinander geklappt sind. Der mittlere Abschnitt 22B bildet damit in der Transportstellung und räumlich gesehen den äußersten Abschnitt. Der äußere Abschnitt 22C ist hierbei zu dem Vorratsbehälter 12 hin geklappt, so dass der äußere und innere Abschnitt 22A, 22C gemeinsam an derselben Längsseite des mittleren Abschnitts 22B platziert sind. Hierzu ist die Länge des mittleren Abschnitts 22B derart ausgebildet, dass sie die Summe der Längen aus innerem und äußerem Abschnitt 22A, 22C übersteigt. Der mittlere Abschnitt 22B ist mit anderen Worten länger als der innere und äußere Abschnitt 22A, 22C zusammen. In einer alternativen Ausführungsform, bei dem die Ausleger 20 jeweils mehrere mittlere Abschnitte 22B aufweisen, müssen die mehreren mittleren Abschnitte 22B in Summe länger sein als der innere und äußere Abschnitt 22A, 22C zusammen.

Des Weiteren ist zu erkennen, dass die Abschnitte 22A-22C derartig verstellbar sind, dass, insbesondere alle im ersten und/oder zweiten Verstaubereich B1, B2, direkt benachbarten und/oder aufeinander folgenden Abschnitte 22A-22C in der Transportstellung jeweils mit ihrer Rückseite R aneinander platziert sind. Dies hat den Vorteil, dass die an den jeweiligen Vorderseiten V der Abschnitte 22A-22C angeordnete Beleuchtungs-, Erfassungs- und/oder Auswerteelektronik 26A-26C in der Transportstellung nicht zwischen zwei gegenüberliegend platzierten Abschnitten 22A-22C eingeschlossen ist. Somit sind die jeweiligen Abschnitte 22A-22C besonders nah bzw. kompakt aneinander platzierbar.

Die zwischen den Abschnitten 22A-22C angeordneten Gelenke 23A-23B sind darüber hinaus dazu eingerichtet, die Abschnitte 22A-22C derartig zu verstellen, dass in der Transportstellung zwischen den jeweils aneinander platzierten Abschnitten 22A-22C ein definierter Abstand A1, A2 gebildet ist, wobei der Abstand A1, A2 bevorzugt minimal ist, damit in der Transportstellung ein besonders geringer Platzbedarf des Gestänges 200 erreicht ist.

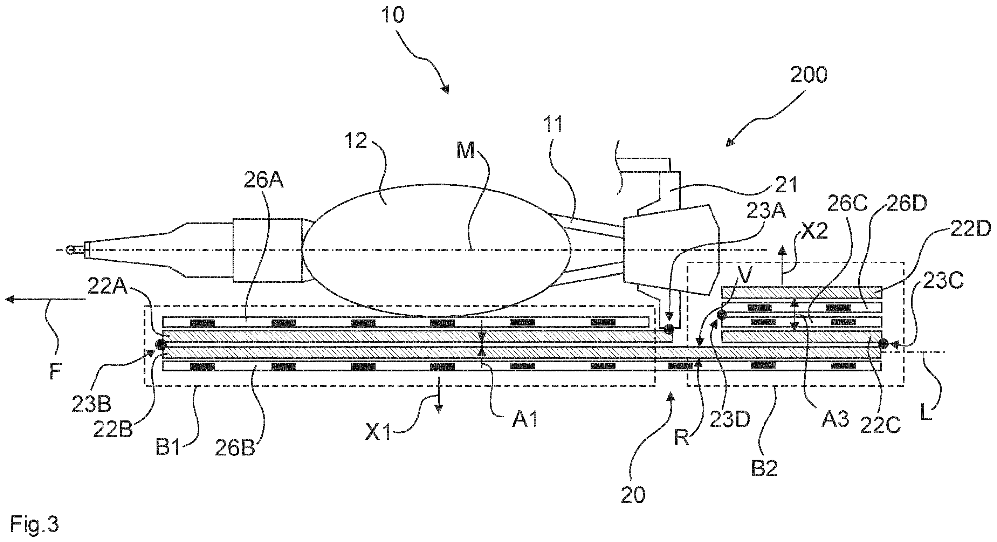

Ein weiteres Ausführungsbeispiel des erfindungsgemäßen Arbeitsgeräts 10 ist in der Fig.3 zu sehen. Die hier gezeigten Ausleger 20 weisen neben dem am mittleren Abschnitt 22B platzierten ersten äußeren Abschnitt 22C jeweils einen weiteren bzw. zweiten äußeren Abschnitt 22D auf, welcher in Transportstellung in dem zweiten Verstaubereich B2 mit dem ersten äußeren Abschnitt 22C aneinander platziert ist. Hierbei ist außerdem zu erkennen, dass die beiden äußeren Abschnitte 22C, 22D mit ihrer jeweiligen Vorderseite V, insbesondere mit der daran angeordneten Beleuchtungs-, Erfassungs- und/oder Auswerteelektronik 26A-26C, aneinander platziert sind. Ein zwischen den beiden äußeren Abschnitten 22C, 22D angeordnetes Gelenk 23 ist dabei derart ausgebildet, dass sich ein zwischen den beiden gegenüberliegenden äußeren Abschnitten 22C, 22D gebildeter und/oder eingeschlossener Abstand A3 gegenüber wenigstens einem im ersten Verstaubereich B1 gebildeten Abstand A1 unterscheidet, insbesondere vergrößert ist.

In diesem Ausführungsbeispiel ist insbesondere zu erkennen, dass der zweite äußere Abschnitt 22D in der Transportstellung derartig geklappt ist, dass er noch weiter zur Mitte bzw. zur Mittelachse M des Arbeitsgeräts 10 hin platziert ist. Die im zweiten Verstaubereich B2 platzierten Abschnitte 22C, 22D sind somit derart aneinander geklappt, dass die Transportbreite des Arbeitsgeräts 10 nicht von den im zweiten Verstaubereich B2 platzierten Abschnitten 22C, 22D beeinflusst und/oder definiert wird.

In einer zur gezeigten alternativen Ausführungsform, kann das landwirtschaftliche Arbeitsgerät 10 auch als Sä- und/oder Düngermaschine ausgebildeten sein, bei dem die Ausbringungselemente 24 als Dosier-, Ausbring- und/oder Ablegeeinrichtungen ausgebildet sind und dazu eingerichtet sind, granulares Material auf der Nutzfläche auszubringen. Das Arbeitsgerät 10 kann hierbei beispielsweise auch als pneumatischer Düngersteuer mit einem Gestänge 200 ausgebildet sein. In einer weiteren alternativen nicht gezeigten Ausführungsform kann das landwirtschaftliche Gerät 10 auch als Bodenbearbeitungsgerät und/oder Pflanzenbehandlungsgerät ausgebildeten sein und Ausbringungselemente 24 aufweisen, die zumindest teilweise in den Feldboden eingreifen.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Landwirtschaftliches Arbeitsgerät
- 11: Geräterahmen
- 12: Vorratsbehälter
- 200: Gestänge
- 20: Ausleger
- 21: Mittlerer Gestängeteil
- 22A: Innerer Abschnitt
- 22B: Mittlerer Abschnitt
- 22C: Erster äußerer Abschnitt
- 22D: Zweiter äußerer Abschnitt
- 23A-23D: Gelenke
- 230A-230C: Vertikale Achse
- 24: Ausbringungselementen
- 26A-26D: Beleuchtungs-, Erfassungs- und/oder Auswerteelektronik

- A1, A2, A3: Abstand zwischen Abschnitten
- B1: Erster Verstaubereich
- B2: Zweiter Verstaubereich
- F: Fahrtrichtung, Arbeitsrichtung
- L: Längsachse
- M: Mittelachse
- R: Rückseite
- V: Vorderseite
- X1, X2: Raumrichtung

## Patentansprüche

1. Landwirtschaftliches Arbeitsgerät (10) mit einem Gestänge (200), insbesondere Feldspritze mit einem Verteilergestänge, welches zwei an beiden Seiten eines mittleren Gestängeteils (21) angeordnete Ausleger (20) aufweist, welche jeweils in mehrere Abschnitte (22A-22D) unterteilt sind, die mittels Gelenken (23A-23D) zwischen einer quer zu einer Arbeitsrichtung (F) ausgeklappten Arbeitsstellung und einer zumindest teilweise etwa in Arbeitsrichtung (F) weisenden, vorzugsweise horizontal und/oder zick-zack-förmig, zusammengefalteten Transportstellung verstellbar sind, **dadurch gekennzeichnet, dass** für jeden der beiden Ausleger (20) jeweils mehrere Verstaubereiche (B1, B2) vorgesehen sind, in denen in Transportstellung jeweils unterschiedliche Abschnitte (22A-22D) aneinander platziert sind, wobei in einer in Arbeitsrichtung (F) weisenden Richtung gesehen ein erster Verstaubereich (B1) und wenigstens einer der Abschnitte (22A-22D) vor dem mittleren Gestängeteil (21) und ein zweiter Verstaubereich (B2) und wenigstens ein weiterer Abschnitt (22A-22D) hinter dem mittleren Gestängeteil (21) angeordnet ist, wobei die Abschnitte des ersten Verstaubereichs in einer die Transportbreite definierenden und/oder beeinflussenden Weise aneinander geklappt sind, während die Abschnitte des zweiten Verstaubereichs in einer die Transportbreite nicht beeinflussenden Weise aneinander geklappt sind.

2. Arbeitsgerät (10) nach Anspruch 1, wobei zwischen den beiden Auslegern (20) wenigstens ein Vorratsbehälter (12) zum Vorhalten von Verteilgut angeordnet ist, **dadurch gekennzeichnet, dass** der erste Verstaubereich (B1) oberhalb und/oder seitlich neben dem Vorratsbehälter (12) und der zweite Verstaubereich (B2) hinter dem Vorratsbehälter (12) angeordnet ist.

3. Arbeitsgerät (10) nach zumindest einem der vorgenannten Ansprüche 1 und/oder 2, wobei die Abschnitte (22A-22D) eines jeweiligen Auslegers (20) räumlich in einer etwa quer zur Arbeitsrichtung (F) gesehenen Richtung hintereinander und/oder aneinander platziert sind, **dadurch gekennzeichnet, dass** die Abschnitte (22B-22D) im zweiten Verstaubereich (B2) räumlich in gegensätzlicher Richtung zu den Abschnitten (22A-22B) im ersten Verstaubereich (B1) hintereinander und/oder aneinander platziert sind.

4. Arbeitsgerät (10) nach zumindest einem der vorgenannten Ansprüche 1 und/oder 2, **dadurch gekennzeichnet, dass** in Transportstellung ein oder mehrere Abschnitte (22B-22D) im zweiten Verstaubereich (B2) zumindest in etwa senkrecht zu den Abschnitten (22A-22B) im ersten Verstaubereich (B1) ausgerichtet sind, wobei der eine oder die mehreren Abschnitte (22B-22D) im zweiten Verstaubereich (B2) vorzugsweise zumindest in etwa parallel zum mittleren Gestängeteil (21) ausgerichtet sind.

5. Arbeitsgerät (10) nach zumindest einem der vorgenannten Ansprüche 1 bis 4, **dadurch gekennzeichnet, dass** die Ausleger (20) jeweils einen dem mittleren Gestängeteil (21) zugewandten inneren Abschnitt (22A), einen dem mittleren Gestängeteil (21) abgewandten äußeren Abschnitt (22C, 22D) und einen oder mehrere zwischen dem inneren und dem äußeren Abschnitt (22A, 22C, 22D) angeordnete mittlere Abschnitte (22B) aufweisen, wobei die Länge des einen oder der mehreren mittleren Abschnitte (22D) die Summe der Längen aus innerem und äußerem Abschnitt (22A, 22C) übersteigt.

6. Arbeitsgerät (10) nach Anspruch 5, **dadurch gekennzeichnet, dass** der eine oder die mehreren mittleren Abschnitte (22D) im ersten Verstaubereich (B1) mit dem inneren Abschnitt (22A) und im zweiten Verstaubereich (B2) mit dem äußeren Abschnitt (22C) aneinander platziert sind.

7. Arbeitsgerät (10) nach zumindest einem der vorgenannten Ansprüche 1 bis 6, wobei jeder der Abschnitte (22A-22D) in der Arbeitsstellung eine in Arbeitsrichtung (F) weisende Vorderseite (V) und eine entgegen der Arbeitsrichtung (F) weisende Rückseite (R) aufweist, **dadurch gekennzeichnet, dass** die Abschnitte (22A-22D) derartig verstellbar sind, dass, vorzugsweise alle im ersten und/oder zweiten Verstaubereich (B1, B2), direkt benachbarte und/oder aufeinander folgende Abschnitte (22A-22D) in Transportstellung jeweils mit ihrer Rückseite (R) aneinander platziert sind.

8. Arbeitsgerät (10) nach zumindest einem der vorgenannten Ansprüche 1 bis 7, wobei die Gelenke (23A-23D) dazu eingerichtet sind, die Abschnitte (22A-22D) derartig zu verstellen, dass in Transportstellung zwischen den jeweils aneinander platzierten Abschnitten (22A-22D) ein definierter Abstand (A1-A3) gebildet ist, **dadurch gekennzeichnet, dass** die Gelenke (23A-23D) derartig ausgebildet sind, dass sich die im ersten und zweiten Verstaubereich (B1, B2) gebildeten Abstände (A1-A3) zumindest teilweise unterscheiden, wobei sich wenigstens einer der im zweiten Verstaubereich (B2) gebildeten Abstände (A2, A3) gegenüber wenigstens einem im ersten Verstaubereich (B1) gebildeten Abstand (A1) unterscheidet, vorzugsweise vergrößert ist.

## Claims

1. Agricultural implement (10) comprising a boom (200), in particular a field sprayer comprising a distributor boom, which has two extension arms (20) arranged on both sides of a central boom part (21), each of which is subdivided into a plurality of portions (22A-22D) which are adjustable by means of joints (23A-23D) between a working position folded out transversely to a working direction (F) and a transport position folded together at least partially approximately pointing in the working direction (F), preferably horizontally and/or in a zigzag shape, **characterized in that** for each of the two extension arms (20) a plurality of stowage regions (B1, B2) are provided, in which different portions (22A-22D) are placed next to each other in the transport position, wherein, viewed in a direction pointing in the working direction (F), a first stowage region (B1) and at least one of the portions (22A-22D) are arranged in front of the central boom part (21) and a second stowage region (B2) and at least one further portion (22A-22D) are arranged behind the central boom part (21), wherein the portions of the first stowage region are folded against one another in a manner defining and/or influencing the transport width, while the portions of the second stowage region are folded against one another in a manner not influencing the transport width.

2. Implement (10) according to claim 1, wherein at least one storage container (12) for holding distribution material is arranged between the two extension arms (20), **characterized in that** the first stowage region (B1) is arranged above and/or to the side of the storage container (12) and the second stowage region (B2) is arranged behind the storage container (12).

3. Implement (10) according to at least one of the preceding claims 1 and/or 2, wherein the portions (22A-22D) of a particular extension arm (20) are spatially placed one behind the other and/or next to each other in a direction approximately perpendicular to the working direction (F), **characterized in that** the portions (22B-22D) in the second stowage region (B2) are spatially placed one behind the other and/or next to each other in the opposite direction to the portions (22A-22B) in the first stowage region (B1).

4. Implement (10) according to at least one of the preceding claims 1 and/or 2**, characterized in that,** in the transport position, one or more portions (22B-22D) in the second stowage region (B2) are aligned at least approximately perpendicular to the portions (22A-22B) in the first stowage region (B1), wherein the one or more portions (22B-22D) in the second stowage region (B2) are preferably aligned at least approximately parallel to the central boom part (21).

5. Implement (10) according to at least one of the preceding claims 1 to 4, **characterized in that** the extension arms (20) each have an inner portion (22A) facing the central boom part (21), an outer portion (22C, 22D) facing away from the central boom part (21) and one or more central portions (22B) arranged between the inner and outer portions (22A, 22C, 22D), wherein the length of the one or more central portions (22D) exceeds the sum of the lengths of the inner and outer portions (22A, 22C).

6. Implement (10) according to claim 5, **characterized in that** the one or more central portions (22D) are placed next to each other in the first stowage region (B1) with the inner portion (22A) and in the second stowage region (B2) with the outer portion (22C).

7. Implement (10) according to at least one of the preceding claims 1 to 6, wherein each of the portions (22A-22D) in the working position has a front (V) pointing in the working direction (F) and a back (R) pointing against the working direction (F), **characterized in that** the portions (22A-22D) are adjustable in such a way that, preferably, all directly adjacent and/or consecutive portions (22A-22D) in the first and/or second stowage region (B1, B2) are placed with their backs (R) against each other in the transport position.

8. Implement (10) according to at least one of the preceding claims 1 to 7, wherein the joints (23A-23D) are configured to adjust the portions (22A-22D) in such a way that a defined distance (A1-A3) is formed between the respective adjacent portions (22A-22D) in the transport position, **characterized in that** the joints (23A-23D) are designed such that the distances (A1-A3) formed in the first and second stowage regions (B1, B2) differ at least partially, wherein at least one of the distances (A2, A3) formed in the second stowage region (B2) differs from at least one distance (A1) formed in the first stowage region (B1), preferably being larger.

## Revendications

1. Outil de travail agricole (10) comportant une rampe (200), en particulier un pulvérisateur agricole comportant une rampe de distribution qui présente deux bras (20) disposés de part et d'autre d'une partie de rampe (21) médiane, lesquels bras sont respectivement subdivisés en plusieurs sections (22A-22D) qui, à l'aide d'articulations (23A-23D), peuvent être déplacées entre une position de travail déployée transversalement par rapport à une direction de travail (F) et une position de transport repliée, orientée au moins partiellement approximativement dans la direction de travail (F), de préférence à l'horizontale et/ou en zigzag,
**caractérisé en ce que**, pour chacun des deux bras (20), il est prévu respectivement plusieurs zones de logement (B1, B2) dans lesquelles, en position de transport, des sections différentes (22A-22D) respectives sont placées les unes près des autres, dans lequel, vue dans la direction de travail (F), une première zone de logement (B1) ainsi qu'au moins l'une des sections (22A-22D) sont disposées devant la partie de rampe (21) médiane, et une seconde zone de logement (B2) ainsi qu'au moins une autre section (22A-22D) sont disposées derrière la partie de rampe (21) médiane, dans lequel les sections de la première zone de logement sont repliées les unes contre les autres de manière à définir et/ou à influencer la largeur de transport, tandis que les sections de la seconde zone de logement sont repliées les unes contre les autres de manière à ne pas influencer la largeur de transport.

2. Outil de travail (10) selon la revendication 1, dans lequel au moins un réservoir (12) destiné à stocker le produit à épandre est disposé entre les deux bras (20), **caractérisé en ce que** la première zone de logement (B1) est disposée au-dessus et/ou latéralement à côté du réservoir (12) et la seconde zone de logement (B2) est disposée derrière le réservoir (12).

3. Outil de travail (10) selon au moins l'une des revendications 1 et/ou 2 précédentes, dans lequel les sections (22A-22D) d'un bras (20) respectif sont disposées les unes derrière les autres et/ou les unes à côté des autres dans l'espace, dans une direction vue approximativement transversalement à la direction de travail (F), **caractérisé en ce que** les sections (22B-22D) situées dans la seconde zone de logement (B2) sont placées les unes derrière les autres et/ou les unes à côté des autres dans l'espace, dans une direction opposée à celle des sections (22A-22B) situées dans la première zone de logement (B1).

4. Outil de travail (10) selon au moins l'une des revendications 1 et/ou 2 précédentes, **caractérisé en ce que**, en position de transport, une ou plusieurs sections (22B-22D) situées dans la seconde zone de logement (B2) sont orientées au moins approximativement perpendiculairement aux sections (22A-22B) de la première zone de logement (B1), dans lequel la ou les sections (22B-22D) de la seconde zone de logement (B2) sont de préférence orientées au moins approximativement parallèlement à la partie de rampe (21) médiane.

5. Outil de travail (10) selon au moins l'une des revendications 1 à 4 précédentes, **caractérisé en ce que** les bras (20) présentent respectivement une section intérieure (22A) tournée vers la partie de rampe (21) médiane, une section extérieure (22C, 22D) détournée de la partie de rampe (21) médiane et une ou plusieurs sections médianes (22B) disposées entre les sections intérieure et extérieure (22A, 22C, 22D), dans lequel la longueur de la ou des sections médianes (22D) dépasse la somme des longueurs des sections intérieure et extérieure (22A, 22C).

6. Outil de travail (10) selon la revendication 5, **caractérisé en ce que** la ou les sections médianes (22D) sont placées contre la section intérieure (22A) dans la première zone de logement (B1) et contre la section extérieure (22C) dans la seconde zone de logement (B2).

7. Outil de travail (10) selon au moins l'une des revendications 1 à 6 précédentes, dans lequel chacune des sections (22A-22D) présente, en position de travail, une face avant (V) orientée dans la direction de travail (F) et une face arrière (R) orientée dans la direction opposée à la direction de travail (F), **caractérisé en ce que** les sections (22A-22D) sont réglables de telle sorte que, de préférence toutes les sections (22A-22D) directement adjacentes et/ou successives situées dans la première et/ou la seconde zone de logement (B1, B2) soient placées les unes contre les autres par leur face arrière (R) en position de transport.

8. Outil de travail (10) selon au moins l'une des revendications 1 à 7 précédentes, dans lequel les articulations (23A-23D) sont conçues pour régler les sections (22A-22D) de telle sorte qu'en position de transport, un écart (A1-A3) défini soit formé entre les sections (22A-22D) respectivement placées les unes contre les autres, **caractérisé en ce que** les articulations (23A-23D) sont réalisées de telle sorte que les écarts (A1-A3) formés dans les première et seconde zones de logement (B1, B2) diffèrent au moins partiellement, dans lequel au moins l'un des écarts (A2, A3) formés dans la seconde zone de logement (B2) diffère d'au moins un écart (A1) formé dans la première zone de logement (B1), et est de préférence plus grand.
